# EUROPÄISCHE PATENTSCHRIFT

(11) **EP 1 074 376 B1**
(45) Veröffentlichungstag und Bekanntmachung des Hinweises auf die Patenterteilung: **22.01.2003**
(21) Anmeldenummer: 99115277.8
(22) Anmeldetag: 02.08.1999
(51) Int. Cl.: B29C 47/40, B29C 47/76

(54) **Doppelschneckenextruder**
Twin screw extruder
Extrudeuse à deux vis

(43) Veröffentlichungstag der Anmeldung: 07.02.2001
(73) Patentinhaber: Weber, Johannes, Dr.-Ing., D-96317 Kronach (DE)
(72) Erfinder: Weber, Johannes, Dr.-Ing., D-96317 Kronach (DE)
(74) Vertreter: Schaumburg, Thoenes & Thurn

(56) Entgegenhaltungen:
- DE-C- 4 338 795
- US-A- 3 115 675
- US-A- 4 047 705
- US-A- 4 088 307
- SCHWARZ,OTTO: 'Kunststoffverarbeitung', 1981, VOGEL-BUCHVERLAG, WUERZBURG * Seite 44 - Seite 45 *

## Beschreibung

Die Erfindung betrifft einen Doppelschnecken-Extruder mit zwei kämmenden, gegenläufig drehenden Schnecken, die jeweils mindestens einen Schneckengang haben.

Ein solcher Doppelschnecken-Extruder hat ein- oder mehrgängige Schnecken mit einem als Kompressionszone bezeichneten axialen Abschnitt zwischen einer Einfüllöffnung und einer Entgasungsöffnung, in dem die Steigungshöhe des Schneckengewindes zur Entgasungsöffnung hin abnimmt. In der Kompressionszone wird ein durch die Einfüllöffnung zugeführtes thermoplastisches Material plastifiziert. Zahlreiche Materialien erfordem sehr geringe Steigungshöhen des Schneckengewindes in der Kompressionszone für eine ausreichende Plastifizierung. Gleichzeitig ist eine Mindestbreite des Schneckensteges einzuhalten, um ihn gegen die in der Kompressionszone herrschenden Drücke zu stabilisieren. Beim Transport des zu extrudierenden Materials entlang der Längsachse einer Schnecke werden Teile des Materials unterschiedlichen Temperaturen und Drücken ausgesetzt. Dadurch können Inhomogenitäten im Materialentstehen, die zu einer verringerten Qualität des Extrusionsergebnisses führen.

Insbesondere bei mehrgängigen Schnecken ist die kleinste erzielbare Steigungshöhe des Schneckengewindes wegen der erforderlichen Mindestbreite des Schneckensteges oft nicht ausreichend. In der Kompressionszone wird daher beim Stand der Technik das Schneckengewinde eingängig ausgeführt, während die anderen axialen Abschnitte der Schnecke mehrgängig sind. Der Nachteil derartiger Doppelschnecken-Extruder ist, daß in mehrgängigen Schnecken die Schneckengäng eingängiger und mehrgängiger Abschnitte häufig unterschiedlich gefüllt sind. Dadurch entstehen ebenfalls Inhomogenitäten im zu extrudierenden Material.

Aus dem Lehrbuch von Otto SCHWARZ: "Kunststoffverarbeitung", S. 44, 45, VOGEL-Buchverlag, Würzburg, 1981, ist es bekannt im Schneckengang der Schnecke einer Einschneckenmschine Misch- und Scherteile vorzusehen.

Es ist Aufgabe der Erfindung, einen Doppelschnecken-Extruder anzugeben, bei dem eine ausreichende Plastifizierung des zu extrudierenden Materials mit großer Homogenität erzielt wird.

Diese Aufgabe wird durch die Merkmale des Anspruchs 1 gelöst. Vorteilhafte Weiterbildungen sind in den abhängigen Ansprüchen angegeben.

Jede Schnecke des erfindungsgemäßen Doppelschnecken-Extruders enthält in ihrem Schneckengang mindestens ein Stauelement. Beim Transport des zu extrudierenden Materials entstehen am Stauelement Scherspannungen, die die Plastifizierung des Materials bewirken. Das gesamte Volumen des Materials in einem Schneckengang wird zwangsweise über die vom Stauelement gebildete Drosselstelle gedrückt. Dadurch werden Inhomogenitäten im Material aufgelöst.

Vorzugsweise beträgt die radiale Höhe des Stauelementes mindestens ein Viertel der Gangtiefe des Schneckengewindes. Ab dieser Mindesthöhe entsteht beim Transport des zu extrudierenden Materials über das Stauelement eine für die Plastifizierung ausreichende Scherspannung.

Bei einem weiteren Ausführungsbeispiel weist jede Schnecke mindestens zwei axiale Abschnitte mit dem Stauelement auf. Das zu extrudierenden Material wird bei dieser Anordnung mehrmals hintereinander über Drosselstellen gedrückt. Auf diese Weise kann die Homogenität des Materials weiter erhöht werden, was insbesondere bei Verwendung solcher thermoplastischer Materialien von Vorteil ist, deren Plastifizierung sehr hohe Drücke und Temperaturen erfordert.

In einem weiteren Ausführungsbeispiel wird das Stauelement lösbar an der Schneckenwelle angeordnet. Auf diese Weise kann es in die Schnecke eingebaut werden, wenn es für die Plastifizierung eines bestimmten Materials erforderlich ist. Auch kann es gegen ein anderes Stauelement mit anderer Stauwirkung ausgetauscht werden. Dadurch ist der erfindungsgemäße Doppelschnecken-Extruder für eine Vielzahl verschiedenartiger zu extrudierender Materialien verwendbar.

Weitere Vorteile und Merkmale der Erfindung werden bei der Beschreibung bevorzugter Ausführungsbeispiele anhand der Zeichnung deutlich. Darin zeigt
- Figur 1: eine Querschnittsansicht eines Extrusionszylinders,
- Figur 2: eine axiale Schnittansicht eines Extrusionszylinders,
- Figur 3: eine Seitenansicht einer Kompressionszone mit Stauelementen und
- Figur 4: einen Querschnitt einer zweigängigen Schnecke mit Stauelementen entlang Linie III-III in Fig. 3.

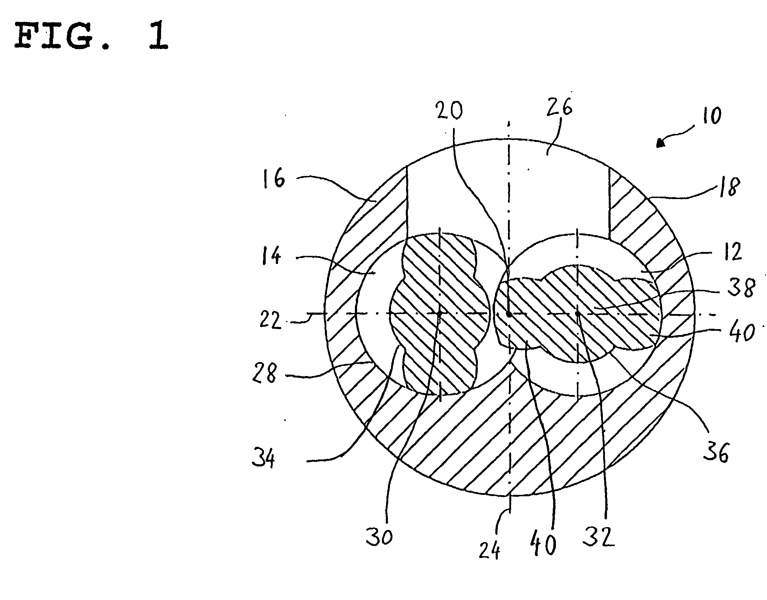

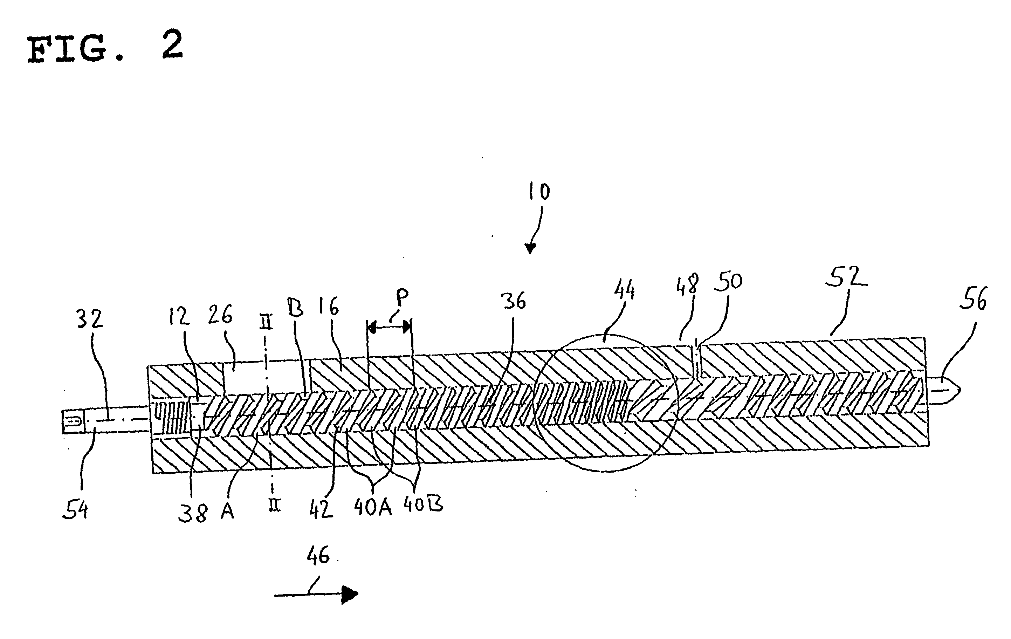

Figur 1 zeigt eine Querschnittsansicht eines Extrusionszylinders 10 längs der Gerade II-II in Figur 2. Der Extrusionszylinder 10 hat in seinem Innern zwei Kammern 12 und 14, die von einer Wand 16 umgeben sind. Die Außenfläche 18 der Wand 16 ist zylinderförmig um eine Längsachse 20 des Extrusionszylinders 10 ausgebildet. Die Längsachse 20 verläuft in Figur 1 senkrecht zur Schnittebene und wird in dieser von einer horizontalen Mittelachse 22 und einer vertikalen Mittelachse 24 des Extrusionszylinders 10 geschnitten. Oberhalb der horizontalen Mittelachse 22 ist in der Wand 16 eine zylinderförmige Einfüllöffnung 26 zentrisch und parallel zur vertikalen Mittelachse 24 ausgebildet Sie führt von der Außenfläche 18 der Wand bis zu den Kammern 12 und 14.

Die Kammern 12 und 14 sind spiegelsymmetrisch beiderseits der vertikalen Mittelachse 24 angeordnet. Die Innenfläche 28 der Wand 16 umschließt sie in Form zweier teilweise überlappender Zylinder, die sich in der vertikalen Mittelachse 24 schneiden. Ihre Längsachsen 30 und 32 verlaufen parallel zur Längsachse 20 des Extrusionszylinders 10 und kreuzen in der Schnittebene der Figur 1 die horizontale Mittelachse 22.

In den Kammern 12 und 14 sind zweigängige, kämmende Schnecken 34 und 36 um die Längsachsen 30 und 32 drehbar angeordnet. Jede Schnecke hat eine zylinderförmige Schneckenwelle 38 und zwei Schneckenstege 40, die fest mit der Schneckenwelle 38 verbunden sind. Die Schneckenstege 40 sind einander gegenüberliegend angeordnet und werden von drei Außenflächen begrenzt, die im Querschnitt gesehen die Form von Kreisbögen haben.

Figur 2 zeigt eine axial geschnittene Ansicht des Extrusionszylinders 10 mit der in der Kammer 12 angeordneten Schnecke 36, die ein Schneckengewinde 42 mit zwei Schneckengängen A und B hat. Zur Verdeutlichung sind zwei aufeinanderfolgende Windungen des Schneckensteges 40 des ersten beziehungsweise zweiten Ganges mit 40A beziehungsweise 40B gekennzeichnet. Das Schneckengewinde 42 hat in verschiedenen axialen Abschnitten unterschiedliche Steigungshöhen p. Die Steigungshöhe p ist der axiale Abstand zweier aufeinanderfolgender Windungen des Schneckensteges 40 eines Schneckenganges A oder B.

In einer Kompressionszone 44 nimmt die Steigungshöhe p längs einer Transportrichtung 46 ab. In einer Entgasungszone 48, die sich in Transportrichtung 46 an die Kompressionszone 44 anschließt, ist die Steigungshöhe p des Schneckengewindes 42 größer als in der Kompressionszone 44. In der Entgasungszone 48 ist in der Wand 16 oberhalb der Längsachse 20 des Extrusionszylinders 10 eine Entgasungsöffnung 50 ausgebildet, die sich vertikal von der Außenfläche 18 bis zur Kammer 12 erstreckt. An die Entgasungszone 48 schließt sich in Transportrichtung eine Ausstoßzone 52 an, in welcher die Steigungshöhe p des Schneckengewindes 42 kleiner ist als in der Entgasungszone 48.

Die Schnecke 36 ragt links- und rechtsseitig aus dem Extrusionszylinder 10 heraus. Linksseitig setzt sich die Schneckenwelle 38 in einem Antriebszapfen 54 fort, welcher der Verbindung mit einem nicht dargestellten Antrieb dient. Rechtsseitig endet die Schneckenwelle 38 mit einem spitz zulaufenden Zapfen 56.

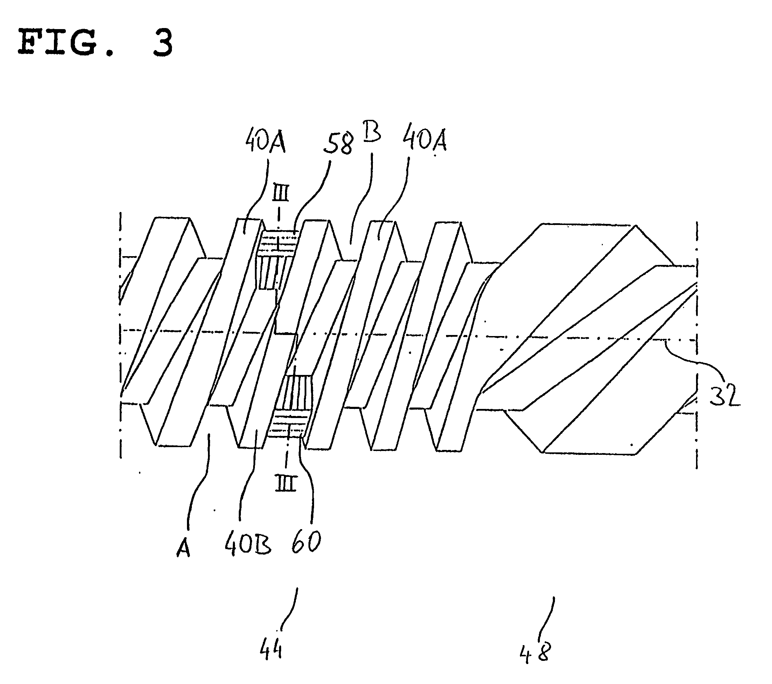

Figur 3 zeigt eine Seitenansicht der Schnecke 36 in der Kompressionszone 44 und am Beginn der Entgasungszone 48. Der dargestellte Bereich ist in Figur 2 mit einem Kreis markiert. Im Schneckengang A ist, in der Darstellung der Figur 3 oberhalb der Längsachse 32, ein erstes Stauelement 58 angeordnet. Es grenzt in axialer Richtung gesehen einerseits an den Schneckensteg 40A und andererseits an den Schneckensteg 40B. Ein zweites Stauelement 60 ist im benachbarten Schneckengang B angeordnet, in der Darstellung der Figur 3 unterhalb der Längsachse 32.

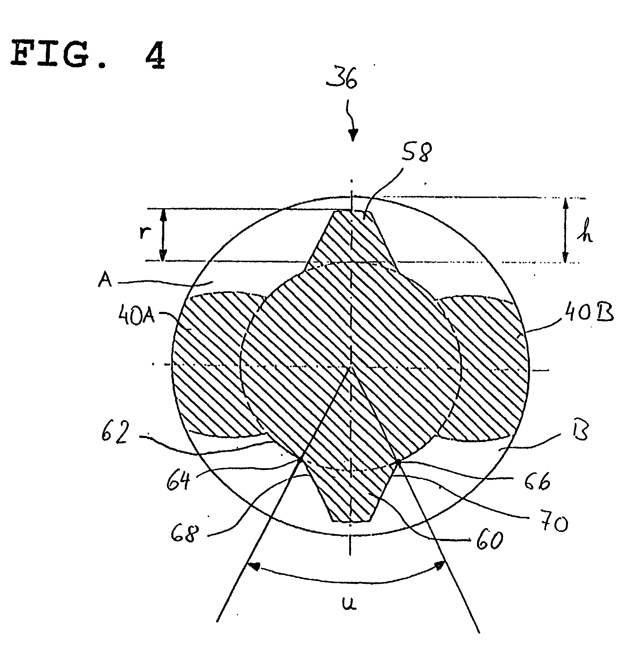

Figur 4 zeigt einen Querschnitt der Schnecke 36, dessen Schnittfläche entlang der Linie III-III in Figur 3 verläuft. Die Stauelemente 58 und 60 sind im Querschnitt gesehen annähernd trapezförmig auf dem kreisförmigen Profil 62 der Schneckenwelle 38 ausgebildet. Auf diesem erheben sie sich mit einer radialen Höhe r, welche im dargestellten Ausführungsbeispiel annähernd fünf Sechstel der Gangtiefe h der Schneckenstege 40A und 40B beträgt. Jedes Stauelement 58 bzw. 60 erstreckt sich im Querschnitt gesehen über eine Bogenlänge u auf dem kreisförmigen Profil der Schneckenwelle 38, begrenzt durch zwei Schnittpunkte 64 und 66 zweier Seiten 68 und 70 des trapezförmigen Stauelementes 58 bzw. 60 mit dem Profil 62 der Schneckenwelle 38. Die Bogenlänge u beträgt im dargestellten Ausführungsbeispiel annähernd ein Sechstel des Umfangs des Profils 62.

Für ein ungehindertes Ineinandergreifen der Schnecken 34 und 36 bei der Drehung gegeneinander haben die in die Schneckengänge A und B eingreifenden Stege der Schnecke 34 Aussparungen in den axialen Abschnitten, in denen die Schnecke 36 mit den Staulementen 58 bzw. 60 versehen ist. Die Tiefe der Aussparungen ist größer als die radiale Höhe r der Stauelemente.

Gegen über der im den Zeichnungen dargestellten Ausführungsform kann sich die radiale Höhe r des Stauelementes 58 in axialer Richtung gesehen und/oder in Richtung des Umfanges gesehen ändern. Femer kann das Stauelement 58 in jeder Schnecke 36 in mindestens einem Abschnitt angeordnet sein, dessen Länge höchstens das Dreifache des Außendurchmessers der Schnecke 36 beträgt. Ein solcher Doppelschnecken-Extruder kann mit mindestens zwei axialen Abschnitten mit je einem Stauelement 58 ausgeführt sein, welches in unterschiedlichen Abschnitten im Querschnitt und/oder in Richtung des Umfanges verschiedenartig ist.

Weiterhin kann der Doppelschnecken-Extruder so ausgeführt sein, daß die Höhe h des Schneckenstenges 40 jeder Schnecke 36 in einem axialen Abschnitt, in dem der Schneckensteg 40 in den mit dem Stauelement 58 versehenen Schneckengang der anderen Schnecke 34 eingreift, annähernd um den Betrag der radialen Höhe r des Stauelementes 58 kleiner ist als in den anderen axialen Abschnitten. Dadurch wird zwischen dem Stauelement 58 an der Schnecke 34 und den Schneckenstegen 40A und 40B sowie der Bohrung 12 oder 14 des Zylinders an der Schnecke 34 die Drosselstelle gebildet.

Schließlich ist es möglich, die Achsen 30 und 32 der Schnecken 34 und 36 in einem spitzen Winkel zueinander anzuordnen. Auch kann jede Schnecke 36 eine einhüllende Fläche in Form eines Konus haben. Dadurch wird der auf das zu extrudierende Material ausgeübte Druck erhöht und so die Plastifizierung des Materials zusätzlich verbessert.

## Patentansprüche

1. Doppelschnecken-Extruder mit zwei kämmenden gegenläufig drehenden Schnecken (36), die jeweils mindestens einen Schneckengang (A) haben, **dadurch gekennzeichnet, daß** jede Schnecke in ihrem Schneckengang (A) mindestens ein Stauelement (58) enthält.

2. Doppelschnecken-Extruder nach Anspruch 1, **dadurch gekennzeichnet, daß** das Stauelement (58) an der Schneckenwelle (38) ausgebildet ist.

3. Doppelschnecken-Extruder nach Anspruch 1 oder 2, **dadurch gekennzeichnet, daß** die radiale Höhe (r) des Stauelementes (58) mindestens ein Viertel der Gangtiefe (h) beträgt.

4. Doppelschnecken-Extruder nach einem der vorhergehenden Ansprüche, **dadurch gekennzeichnet, daß** sich die radiale Höhe (r) des Stauelementes (58) in axialer Richtung gesehen und/oder in Richtung des Umfanges gesehen verändert.

5. Doppelschnecken-Extruder nach einem der vorhergehenden Ansprüche, **dadurch gekennzeichnet, daß** das Stauelement (58) im Querschnitt gesehen von der Schneckenwelle (38) ausgehend sich in radialer Richtung verjüngt.

6. Doppelschnecken-Extruder nach Anspruch 5, **dadurch gekennzeichnet, daß** die Querschnittsform des Stauelements (58) annähernd einem Trapez entspricht.

7. Doppelschnecken-Extruder nach einem der vorhergehenden Ansprüche, **dadurch gekennzeichnet, daß** sich das Stauelement (58) höchstens über den halben Umfang der Schneckenwelle (38) erstreckt.

8. Doppelschnecken-Extruder nach einem der vorhergehenden Ansprüche, **dadurch gekennzeichnet, daß** das Stauelement (58) lösbar mit der Schneckenwelle (38) verbunden ist.

9. Doppelschnecken-Extruder nach einem der vorhergehenden Ansprüche, **dadurch gekennzeichnet, daß** das Stauelement (58) in jeder Schnecke (36) in mindestens einem axialen Abschnitt angeordnet ist, dessen Länge höchstens das Dreifache des Außendurchmessers der Schnecke (36) beträgt.

10. Doppelschnecken-Extruder nach Anspruch 9, **dadurch gekennzeichnet, daß** jede Schnecke (36) mindestens zwei axiale Abschnitte mit je einem Stauelement (58) aufweist.

11. Doppelschnecken-Extruder nach Anspruch 10, **dadurch gekennzeichnet, daß** die Stauelemente (58) in den unterschiedlichen Abschnitten im Querschnitt und/oder in Richtung des Umfangs verschieden geformt sind.

12. Doppelschnecken-Extruder nach einem der vorhergehenden Ansprüche, **dadurch gekennzeichnet, daß** das Stauelement (58) an der Schnecke (36) in axialer Richtung gesehen zwischen der Einfüllöffnung (26) und dem Entgasungsbereich (48) angeordnet ist.

13. Doppelschnecken-Extruder nach einem der vorhergehenden Ansprüche, **dadurch gekennzeichnet, daß** der Schneckensteg (40) jeder Schnecke (36) eine Höhe (h) hat, die in einem axialen Abschnitt, in dem der Schneckensteg (40) in den mit dem Stauelement versehenen Schneckengang (A) der anderen Schnecke (34) eingreift, annähernd um den Betrag der radialen Höhe(r) des Stauelementes (58) kleiner ist als in den anderen axialen Abschnitten.

14. Doppelschnecken-Extruder nach einem der vorhergehenden Ansprüche, **dadurch gekennzeichnet, daß** die Schnecken (36) mehrgängig ausgebildet sind und daß das Stauelement in jedem Schneckengang (A) einer Schnecke (36) an der gleichen axialen Position ausgebildet ist.

15. Doppelschnecken-Extruder nach einem der vorhergehenden Ansprüche, **dadurch gekennzeichnet, daß** die Achsen (32) der Schnecken (36) parallel zueinander stehen.

16. Doppelschnecken-Extruder nach einem der vorhergehenden Ansprüche, **dadurch gekennzeichnet, daß** die Achsen (32) der Schnecken (36) einen spitzen Winkel miteinander bilden.

17. Doppelschnecken-Extruder nach einem der vorhergehenden Ansprüche, **dadurch gekennzeichnet, daß** jede Schnecke (36) eine einhüllende Fläche in Zylinderform hat.

18. Doppelschnecken-Extruder nach einem der vorhergehenden Ansprüche, **dadurch gekennzeichnet, daß** jede Schnecke (36) eine einhüllende Fläche in Form eines Konus hat.

## Claims

1. A double screw extruder with two meshing screws (36) rotating in opposite directions, each having at least one screwthread (A), **characterised in that** each screw contains at least one baffle element (58) in its screwthread (A).

2. A double screw extruder according to claim 1, **characterised in that** the baffle element (58) is formed on the screw shaft (38).

3. A double screw extruder according to claim 1 or 2, **characterised in that** the radial height (r) of the baffle element (58) is at least a quarter of the thread depth (h).

4. A double screw extruder according to any of the preceding claims, **characterised in that** the radial height (r) of the baffle element (58) varies as seen in the axial direction and/or in the direction of the periphery.

5. A double screw extruder according to any of the preceding claims, **characterised in that** the baffle element (58), viewed in cross-section, tapers in the radial direction starting from the screw shaft (38).

6. A double screw extruder according to claim 5, **characterised in that** the cross-sectional shape of the baffle element (58) is approximately a trapezium.

7. A double screw extruder according to any of the preceding claims, **characterised in that** the baffle element (58) extends at most over half the periphery of the screw shaft (38).

8. A double screw extruder according to any of the preceding claims, **characterised in that** the baffle element (58) is releasably connected to the screw shaft (38).

9. A double screw extruder according to any of the preceding claims, **characterised in that** the baffle element (58) in each screw (36) is disposed in at least one axial portion which is not longer than three times the outer diameter of the screw (36).

10. A double screw extruder according to claim 9, **characterised in that** each screw (36) has at least two axial portions each with a baffle element (58).

11. A double screw extruder according to claim 10, **characterised in that** the baffle elements (58) in the various portions are differently shaped in cross-section and/or in the direction of the periphery.

12. A double screw extruder according to any of the preceding claims, **characterised in that** the baffle element (58) on the screw (36), viewed in the axial direction, is disposed between the filling opening (26) and the degassing region (48).

13. A double screw extruder according to any of the preceding claims, **characterised in that** the web (40) of each screw (36) has a height (h) which, in an axial portion in which the web (40) engages the thread (A) of the other screw (34) provided with the baffle element, is smaller by approximately the radial height (r) of the baffle element (58) than in the other axial portions.

14. A double screw extruder according to any of the preceding claims, **characterised in that** the screws (36) are multi-threaded and the baffle element in each thread (A) of a screw (36) is disposed at the same axial position.

15. A double screw extruder according to any of the preceding claims, **characterised in that** the axes (32) of the screws (36) are parallel to one another.

16. A double screw extruder according to any of the preceding claims, **characterised in that** the axes (32) of the screws (36) are at an acute angle to one another.

17. A double screw extruder according to any of the preceding claims, **characterised in that** each screw (36) has a cylindrical envelope surface.

18. A double screw extruder according to any of the preceding claims, **characterised in that** each screw (36) has a conical envelope surface.

## Revendications

1. Extrudeuse à double vis avec deux vis (36) tournant en sens contraire en engrènement, dont chacune présente au moins un filet (A), **caractérisée en ce que** chaque vis comporte au moins un élément de retenue (58) dans son filet (A).

2. Extrudeuse à double vis suivant la revendication 1, **caractérisée en ce que** l'élément de retenue (58) est réalisé sur l'arbre de vis (38).

3. Extrudeuse à double vis suivant l'une des revendications 1 et 2, **caractérisée en ce que** la hauteur radiale (r) de l'élément de retenue (58) est au moins égale à un quart de la profondeur (h) du filet.

4. Extrudeuse à double vis suivant l'une des revendications précédentes, **caractérisée en ce que** la hauteur radiale (r) de l'élément de retenue (58) se modifie, vue dans la direction axiale et/ou dans la direction du pourtour.

5. Extrudeuse à double vis suivant l'une des revendications précédentes, **caractérisée en ce que** l'élément de retenue (58), vu en coupe transversale, se rétrécit dans la direction radiale à partir de l'arbre de vis (38).

6. Extrudeuse à double vis suivant la revendication 5, **caractérisée en ce que** la forme en coupe transversale de l'élément de retenue (58) correspond approximativement à un trapèze.

7. Extrudeuse à double vis suivant l'une des revendications précédentes, **caractérisée en ce que** l'élément de retenue (58) s'étend au maximum sur la moitié du pourtour de l'arbre de vis (38).

8. Extrudeuse à double vis suivant l'une des revendications précédentes, **caractérisée en ce que** l'élément de retenue (58) est assemblé de manière amovible avec l'arbre de vis (38).

9. Extrudeuse à double vis suivant l'une des revendications précédentes, **caractérisée en ce que** l'élément de retenue (58). est disposé dans chaque vis (36) dans au moins une section axiale, dont la longueur est au maximum égale au triple du diamètre extérieur de la vis (36).

10. Extrudeuse à double vis suivant la revendication 9, **caractérisée en ce que** chaque vis (36) présente au moins deux sections axiales respectivement munies d'un élément de retenue (58).

11. Extrudeuse à double vis suivant la revendication 10, **caractérisée en ce que** les éléments de retenue (58) sont conformés différemment en coupe transversale et/ou en direction du pourtour dans les sections différentes.

12. Extrudeuse à double vis suivant l'une des revendications précédentes, **caractérisée en ce que** l'élément de retenue (58) est disposé sur la vis (36), vu dans la direction axiale, entre l'ouverture de chargement (26) et la zone de dégazage (48).

13. Extrudeuse à double vis suivant l'une des revendications précédentes, **caractérisée en ce que** le filet d'hélice (40) de chaque vis (36) a une hauteur (h), qui est plus faible à peu près de la valeur de la hauteur radiale (r) de l'élément de retenue (58) dans une section axiale, dans laquelle le filet d'hélice (40) s'engage dans le filet (A), muni de l'élément de retenue, de l'autre vis (34), que dans les autres sections axiales.

14. Extrudeuse à double vis suivant l'une des revendications précédentes, **caractérisée en ce que** les vis (36) ont une réalisation à plusieurs filets, et **en ce que** l'élément de retenue est réalisé sur la même position axiale dans chaque filet (A) d'une vis (36).

15. Extrudeuse à double vis suivant l'une des revendications précédentes, **caractérisée en ce que** les axes (32) des vis (36) sont parallèles entre eux.

16. Extrudeuse à double vis suivant l'une des revendications précédentes, **caractérisée en ce que** les axes (32) des vis (36) forment entre eux un angle aigu.

17. Extrudeuse à double vis suivant l'une des revendications précédentes, **caractérisée en ce que** chaque vis (36) a une surface enveloppante en forme de cylindre.

18. Extrudeuse à double vis suivant l'une des revendications précédentes, **caractérisée en ce que** chaque vis (36) a une surface enveloppante en forme d'un cône.
